# EUROPEAN PATENT APPLICATION

(11) **EP 3 351 832 A1**
(43) Date of publication of application: **25.07.2018**
(21) Application number: 16846257.0
(22) Date of filing: 31.08.2016
(51) Int. Cl.: F16J 15/24, F16J 15/20, G03G 15/00, G03G 15/08

(54) **SEALING MATERIAL AND SEALING MECHANISM**

(30) Priority: 15.09.2015 JP 2015181608
(71) Applicant: Nitta Corporation, Osaka-shi, Osaka 556-0022 (JP)
(72) Inventor: AOKI, Kenichiro, Yamatokohriyama-shi Nara 639-1085 (JP)
(74) Representative: Viering, Jentschura & Partner mbB Patent- und Rechtsanwälte
(86) International application number: PCT/JP2016/075502
(87) International publication number: WO 2017/047386

(57) **Abstract**

A sealing material 1 includes a cylindrical sliding layer 2, an elastic integument layer 3, and a fastening fiber 4. The cylindrical sliding layer 2 includes an insertion hole 21 to permit slidable insertion of a bar-shaped body, and is composed of a material in which a fiber and an elastic material are integrated with each other. The elastic integument layer 3 is laminated on an outer peripheral surface 22 of the sliding layer 2. The fastening fiber 4 is continuously wound in a state of being uncontacted with the outer peripheral surface 22 of the sliding layer 2 over at least one convolution along a circumferential direction on the inside of the elastic integument layer 3 or an outer peripheral surface of the elastic integument layer 3. A sealing mechanism uses the sealing material 1.

## Description

### TECHNICAL FIELD

The present invention relates to a sealing material for sealing around a bar-shaped body, and to a sealing mechanism.

### BACKGROUND ART

A sealing material for sealing around a bar-shaped body has been known. The sealing material is usually composed of a rubber or the like, and therefore has the following problem. That is, when used under high load for a long period of time, creep deformation of the rubber may occur, so that a compressive force onto the bar-shaped body may become lower and sealing property may become lower.

Patent Document 1 describes a cylindrical sealing member intended to prevent leakage of powder by sealing a rotary shaft of an image processing apparatus using powder that is toner. The sealing member keeps a balance between sliding resistance and sealing property in such a way as to press down around the shaft under an appropriate compressive force by bringing pile or fibers into a cylindrical shape, and then restraining an outer peripheral side thereof with a metal support member.

However, because the pile and fibers have low durability and the sealing property becomes lower when the powder enters between the pile or fibers, the cylindrical sealing member has been unusable for a long period of time under high load. The cylindrical sealing member needs strict tolerance setting with respect to an attachment hole (case) designed to receive the cylindrical sealing member for the purpose of obtaining the compressive force onto the shaft.

Meanwhile the present applicant has previously developed a sealing material described in Patent Document 2 as a cylindrical sealing member. More excellent durability and sealing property are desired for this type of sealing material.

### PRIOR ART DOCUMENTS

### PATENT DOCUMENTS

Patent Document 1: Japanese Unexamined Patent Publication No. 2008-26728
Patent Document 2: Japanese Unexamined Patent Publication No. 2014-5865

### SUMMARY OF THE INVENTION

### PROBLEMS TO BE SOLVED BY THE INVENTION

The present invention aims at providing a sealing material with excellent durability and sealing property, as well as a sealing mechanism.

### MEANS FOR SOLVING THE PROBLEMS

The inventor of the present invention has completed the present invention as a result of intensive studies for solving the above problem. Specifically, the sealing material of the present invention includes a cylindrical sliding layer, an elastic integument layer, and a fastening fiber. The cylindrical sliding layer includes an insertion hole to permit slidable insertion of a bar-shaped body. The cylindrical sliding layer is composed of a material in which a fiber and an elastic material are integrated with each other. The elastic integument layer is laminated on an outer peripheral surface of the sliding layer. The fastening fiber is continuously wound in a state of being uncontacted with the outer peripheral surface of the sliding layer over at least one convolution along a circumferential direction on the inside of the elastic integument layer or an outer peripheral surface of the elastic integument layer.

In a sealing mechanism of the present invention, the space between a hole of a structure and a shaft that is a bar-shaped body being inserted into the hole is sealed by the sealing material.

### EFFECTS OF THE INVETION

The sealing material of the present invention produces effects of having excellent durability and sealing property.

### BRIEF DESCRIPTION OF THE DRAWINGS

FIG. 1 is a diagram showing a sealing material in one embodiment of the present invention, FIG. 1(a) is a plan view of the sealing material, FIG. 1(b) is a side view taken in the direction of arrow X1 in FIG. 1(a), and FIG. 1(c) is a sectional view taken along line X2-X2 in FIG. 1(a);
FIG. 2 is a schematic sectional view showing a sealing mechanism in an embodiment of the present invention; and
FIG. 3 is a plan view showing a sealing material in another embodiment of the present invention.

### EMBODIMENTS FOR CARRYING OUT THE INVENTION

### <Sealing Material>

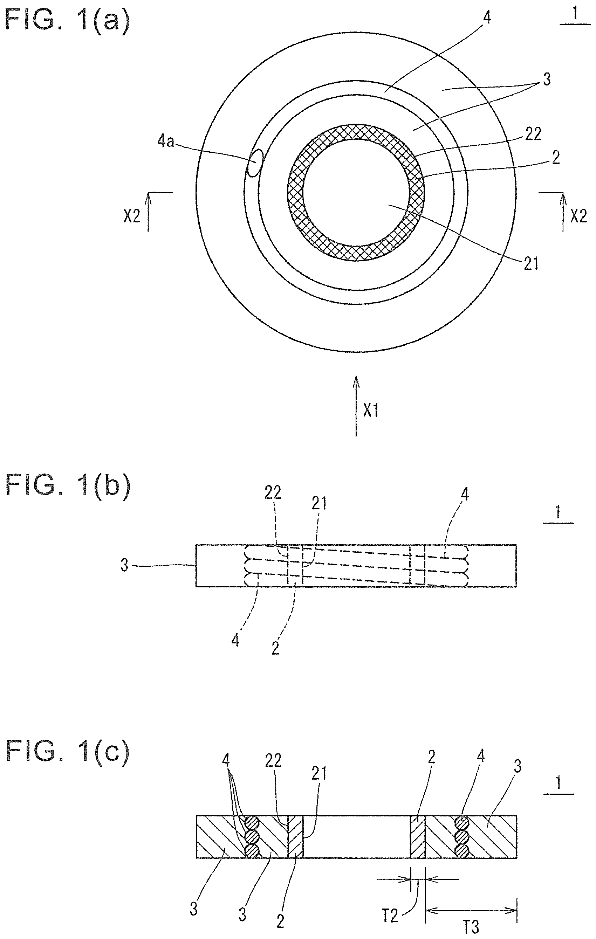

A sealing material in one embodiment of the present invention is described in detail below with reference to FIG. 1.

As shown in FIG. 1(a), the sealing material 1 of the present embodiment has a cylindrical (ring-shaped) member and includes, as a constitutional member thereof, a sliding layer 2, an elastic integument layer 3, and a fastening fabric 4. The individual constitutional members of the sealing material 1 of the present embodiment are described sequentially below.

### (Sliding Layer)

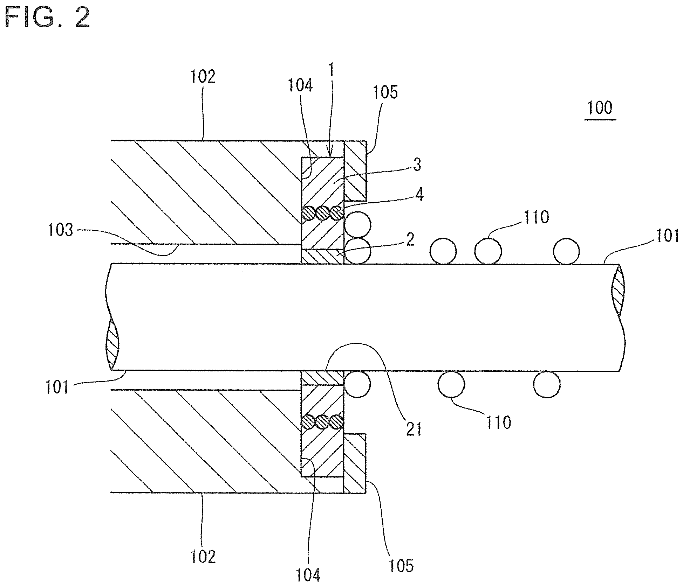

The sliding layer 2 is a cylindrical member, more specifically a circular cylindrical member. The sliding layer 2 includes an insertion hole 21. The insertion hole 21 is a portion designed to permit slidable insertion of a bar-shaped body. Specifically, the bar-shaped body of the present embodiment inserted into the insertion hole 21 is a columnar shaft 101 as shown in FIG. 2 described later. The shaft 101 is a member subjected to relative movement, such as reciprocating motion or rotation, with respect to a structure 102. The insertion hole 21 of the present embodiment is configured so that the insertion hole 21 and the shaft 101 slide upon each other when the shaft 101 in a state of being inserted into the insertion hole 21 is moved relative to the structure 102.

The sliding layer 2 of the present embodiment which has the above configuration is composed of a material in which fiber and an elastic material are integrated with each other. With this configuration, sliding resistance to the shaft 101 is reducible, thus making it possible to produce excellent durability against sliding friction.

The fiber constituting the sliding layer 2 is mainly intended to be brought into sliding contact with the shaft 101, and the fiber becomes a main factor reducing the sliding resistance to the shaft 101. Examples of the fibers include nylon fiber, polyester fiber, Teflon (registered trademark) fiber, liquid crystal polymer fiber, cotton thread, carbon fiber, glass fiber, and aramid fiber. These fibers exemplified above are usable by mixing one kind or two or more kinds thereof.

As a form of the fiber constituting the sliding layer 2, there are, for example, fabric materials, such as woven fabrics, non-woven fabrics, and knitted fabrics. The woven fabrics includes canvases. Although a basis weight of the fabric material is usually 20-200 g/m², no particular limitation is imposed thereon.

When the fiber is in the form of a fabric material, the fabric material and the elastic material are preferably integrated with each other so that the fabric material is brought into sliding contact with the shaft 101. Specifically, the fabric material is preferably impregnated with the elastic material. Thereby, the elastic material enters between the fibers constituting the fabric material, thus making it possible to reinforce the fabric material. Furthermore, wear resistance is also improved because wear due to friction between the fabric materials is reducible. When impregnating the fabric material with the elastic material, the elastic material is preferably brought into a liquid state by being dissolved in a solvent or the like, in order to smoothly carry out an impregnation process.

The form of fibers may be, for example, short fibers besides the above-mentioned fabric material. When the form of the fibers is short fibers, the short fibers are preferably mixed into the elastic material, followed by integral formation.

The elastic material constituting the sliding layer 2 is mainly intended to improve durability of the above-mentioned fibers. Examples of the elastic material include rubbers and elastomers. Examples of the rubbers include natural rubber, nitrile rubber, chloroprene rubber, hypalon, polybutadiene rubber, ethylene-propylene rubber (EPM), ethylene-propylene-diene rubber terpolymer (EPDM), hydrogenated acrylonitrile butadiene rubber (H-NBR), silicone rubber, fluoro rubber, acryl rubber, styrene butadiene rubber, and chlorinated polyethylene rubber. Examples of the elastomers include millable urethane, thermoplastic polyurethane, thermoplastic polyurethane, and thermosetting polyester. These elastic materials exemplified above are usable by mixing one kind or two or more kinds thereof.

Additives may be added to the elastic material constituting the sliding layer 2. Examples of the additives include vulcanizing agents, vulcanization accelerators, and reinforcing agents. Examples of the vulcanizing agents include organic peroxides, such as dicumyl peroxide, organic sulfur compounds, and metal oxides. Examples of the vulcanization accelerators include fatty acids, such as stearic acid, and metal oxide. Examples of the reinforcing agents include carbon black and white carbon.

As additives other than those described above, for example, an anti-aging agent, filler, plasticizer, adhesive, and solid lubricant may be added. Of these additives exemplified above, addition of the solid lubricant agent to the elastic material can contribute to reducing sliding resistance. Examples of the solid lubricants include graphite, silicone oil, fluorine powder, and molybdenum disulfide.

### (Elastic Integument Layer)

The elastic integument layer 3 is a member laminated on an outer peripheral surface 22 of the sliding layer 2 described above as shown in FIG. 1(b). The elastic integument layer 3 is the member composed of an elastic material. During the relative movement of the shaft 101 with respect to the structure 102, the elastic integument layer 3 follows up the relative movement so as to stabilize the shape of the sliding layer 2, thereby functioning as a member that retains sealing property.

As an elastic material constituting the elastic integument layer 3, the same elastic materials as exemplified above in the sliding layer 2 can be illustrated. Additives may be added to the elastic material constituting the sliding layer 2. Examples of the additives include vulcanizing agents, vulcanization accelerators, reinforcing agents, anti-aging agents, fillers, plasticizers, and adhesives. Of these additives exemplified above, examples of the vulcanizing agents, vulcanization accelerators, and reinforcing agents are the same as those exemplified above in the sliding layer 2.

As shown in FIG. 1(c), a radial thickness T3 of the elastic integument layer 3 is larger than a radial thickness T2 of the sliding layer 2 in the present embodiment. With this configuration, it is possible to improve the above-mentioned effect of retaining sealing property.

### (Fastening Fiber)

The fastening fiber 4 is a member that enhances the compressive force of the sealing material 1 onto the shaft 101, in other words, the fastening force onto the shaft 101. The fastening fiber 4 is continuously wound from an end portion 4a thereof along a circumferential direction on the inside of the elastic integument layer 3 in the present embodiment. More specifically, the fastening fiber 4 is continuously wound in a state of being uncontacted with the outer peripheral surface 22 of the sliding layer 2 over at least one convolution along the circumferential direction on the inside of the elastic integument layer 3. With this configuration, the fastening force of the sealing material 1 can be enhanced. Consequently, excellent durability and sealing property are producible, thus leading to long-term use under high load. Furthermore, a high fastening force occurs due to the structure of the sealing material 1 in the present embodiment. Hence, unlike conventional ones, there is no need for the strict tolerance setting with respect to the attachment member, such as the attachment hole for attaching the sealing material, thus permitting flexible designs.

Examples of the fastening fiber 4 include the same fibers as exemplified above in the sliding layer 2. The fastening fiber 4 is particularly preferably at least one kind selected from among the carbon fibers, glass fibers, and aramid fibers. Because each of the carbon fibers, glass fibers, and aramid fibers has inflexibility, it is possible to enhance the fastening force of the sealing material 1.

The fastening fiber 4 of the present embodiment has the following configuration from the viewpoint of enhancing the fastening force of the sealing material 1. The fastening fiber 4 of the present embodiment has a filamentous shape. In the present embodiment, a plurality of the fastening fibers 4 are bundled into the filamentous shape. The fastening fibers 4 are wound over a plurality of convolutions, and the fastening fibers 4 are wound helically in the present embodiment. Additionally, the fastening fibers 4 and 4 adjacent to each other are contacted with each other in the present embodiment. With these configurations, the fastening fibers 4 can be wound tightly on the inside of the elastic integument layer 3, thus enhancing the fastening force of the sealing material 1.

The sealing material 1 of the present embodiment having the above configurations is manufacturable, for example, in the following manner. Firstly, a fabric material being impregnated with an elastic material is wound over at least one layer around a bar-shaped object having the same shape as the shaft 101, thereby obtaining a first layer constituting the sliding layer 2. Subsequently, an elastic material constituting the elastic integument layer 3 is wound over at least one layer around an outer peripheral surface of the first layer, thereby obtaining a second layer. Subsequently, the fastening fiber 4 is continuously wound over at least one convolution along the circumferential direction on the outer peripheral surface of the second layer so as to be uncontacted with the outer peripheral surface of the first layer. Thereafter, an elastic material constituting the elastic integument layer 3 is wound therearound over at least one layer, thereby obtaining a third layer. Finally, a laminated cylindrical body in which the first layer, the second layer, and the third layer are laminated in this order is accommodated between upper and lower metal molds capable of forming the laminated cylindrical body into the shape of the sealing material 1. The individual layers are bonded to one another by heating under pressure, and are then taken out of the metal molds and cut in a necessary thickness, thereby obtaining the sealing material 1.

### <Sealing Mechanism>

A sealing mechanism in an embodiment of the present invention is described in detail below with reference to FIG. 2 by taking, for example, the case of using the sealing material 1 described above.

As shown in FIG. 2, the sealing mechanism 100 of the present embodiment has such a configuration that the space between a hole 103 of the structure 102 and the shaft 101, which is the bar-shaped body being inserted into the hole 103, is sealed by the above-mentioned sealing material 1. With this configuration, the sealing material 1 producing the excellent durability and sealing property seals the space between the hole 103 of the structure 102 and the shaft 101 being inserted into the hole 103. It is therefore possible to prevent foreign matter 110, such as powder attached to the shaft 101, from entering the hole 103 over a long period of time. The configuration of the sealing mechanism 100 of the present embodiment is specifically described below.

The structure 102 in the sealing mechanism 100 includes a concave-shaped sealing material accommodating part 104 located in the vicinity of an opening of the hole 103. The sealing material accommodating part 104 has an inner diameter which is somewhat smaller than a diameter of the sealing material 1, and which is larger than an inner diameter of the hole 103. The hole 103 has a larger inner diameter than a diameter of the shaft 101. With these configurations, after the shaft 101 is inserted into the hole 103 of the structure 102 by inserting the shaft 101 into the insertion hole 21 of the sealing material 1, the sealing material 1 can be accommodated in a press-fitted state within the sealing material accommodating part 104. Alternatively, after the sealing material 1 is accommodated in the press-fitted state within the sealing material accommodating part 104, the shaft 101 may be inserted into the hole 103 of the structure 102 through the insertion hole 21 of the sealing material 1.

After the sealing material 1 is accommodated within the sealing material accommodating part 104, a retaining member 105 is secured around an edge part of an opening of the sealing material accommodating part 104. This makes it possible to prevent the sealing material 1 from dropping out from the sealing material accommodating part 104.

The foreign matter 110, such as the powder being attached to the shaft 101, is removable by reciprocating motion of the shaft 101 with respect to the structure 102. Specifically, the reciprocating motion of the shaft 101 with respect to the structure 102 can cause the foreign matter 110 being attached to the shaft 101 to move toward the elastic integument layer 3 of the sealing material 1, thus making it possible to remove the foreign matter 110 from the shaft 101.

A front surface of the sealing material 1 located on a side, from which the foreign matter 110 may enter, is formed vertical to the shaft 101 in the present embodiment. Alternatively, the front surface of the sealing material 1 may be inclined so as to be away from the hole 103 as going from an outer peripheral surface of the sealing material 1 toward an inner peripheral surface side. With this configuration, the foreign matter 110 is highly efficiently removable from the shaft 101.

The sealing material 1 and the sealing mechanism 100 in the foregoing embodiments are suitably usable for driving apparatuses handling powders or liquids. Examples of the driving apparatuses include vehicles, such as automobiles, motorbikes, motorcycles, amusement vehicles, motorboats, railway vehicles, ships, aircrafts, and spaceships, industrial machines, such as various machines, machine tools, robots, as well as industrial machines, such as production facilities, image processing apparatuses, semiconductor manufacturing apparatuses, chip mounters, and straight moving members, such as ball screws, each of which is easily affected by vibration, without being limited thereto.

Although the preferred embodiments of the present invention have been illustrated and described above, it is, of course, possible to make any arbitrary ones insofar as they do not depart from the gist of the present invention.

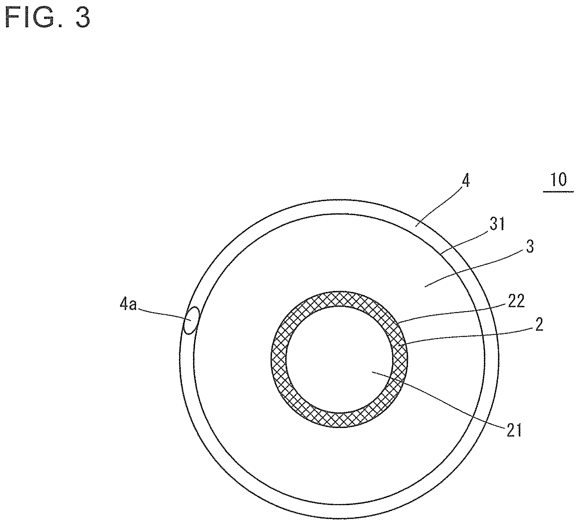

For example, in the above embodiment, the fastening fiber 4 is continuously wound in the state of being uncontacted with the outer peripheral surface 22 of the sliding layer 2 over at least one convolution along the circumferential direction on the inside of the elastic integument layer 3. Alternatively, the fastening fiber 4 may be wound as shown in FIG. 3. In a sealing material 10 shown in FIG. 3, the fastening fiber 4 is continuously wound over at least one convolution along the circumferential direction of an outer peripheral surface 31 of the elastic integument layer 3. This configuration is also capable of enhancing the fastening force of the sealing material 10 as in the case of the sealing material 1 of the foregoing embodiment.

Other configurations are similar to those in the sealing material 1 of the foregoing embodiment, and their respective descriptions are therefore omitted here.

Although the fastening fiber 4 has the filamentous shape in the foregoing embodiment, the fastening fiber 4 may have any shape other than the filamentous shape. Examples of other shapes include a shape obtainable by knitting the fastening fiber 4.

The fastening fibers 4 and 4 adjacent to each other are in contact with each other in the foregoing embodiment. Alternatively, the fastening fibers 4 and 4 adjacent to each other may be located so as to have no contact with each other.

Although the bar-shaped body is the columnar shaft 101 in the foregoing embodiment, the bar-shaped body is not limited to the columnar shaft 101. The shape of the shaft 101 is not limited to the columnar shape, and other shapes may be employed. Examples of the other shapes include polygonal cylindrical shapes.

### DESCRIPTION OF THE REFERENCE NUMERAL

- 1, 10: sealing material
- 2: sliding layer
- 21: insertion hole
- 22: outer peripheral surface
- 3: elastic integument layer
- 31: outer peripheral surface
- 4: fastening fiber
- 4a: end portion
- 100: sealing mechanism
- 101: shaft
- 102: structure
- 103: hole
- 104: sealing material accommodating part
- 105: retaining member
- 110: foreign matter

## Claims

1. A sealing material comprising:
a cylindrical sliding layer comprising an insertion hole designed to permit slidable insertion of a bar-shaped body, the cylindrical sliding layer comprising a material in which a fiber and an elastic material are integrated with each other;
an elastic integument layer laminated on an outer peripheral surface of the sliding layer; and
a fastening fiber continuously wound in a state of being uncontacted with the outer peripheral surface of the sliding layer over at least one convolution along a circumferential direction on an inside of the elastic integument layer or an outer peripheral surface of the elastic integument layer.

2. The sealing material according to claim 1, wherein the fastening fiber comprises at least one kind selected from among carbon fibers, glass fibers, and aramid fibers.

3. The sealing material according to claim 1 or 2, wherein the fastening fiber has a filamentous shape.

4. The sealing material according to any one of claims 1 to 3, wherein the fastening fiber is wound over a plurality of convolutions.

5. The sealing material according to claim 4, wherein the fastening fiber is helically wound.

6. The sealing material according to claim 4 or 5, wherein the fastening fibers adjacent to each other are contacted with each other.

7. The sealing material according to any one of claims 1 to 6, wherein a radial thickness of the elastic integument layer is larger than a radial thickness of the sliding layer.

8. A sealing mechanism in which a space between a hole of a structure and a bar-shaped body being inserted into the hole is sealed by a sealing material according to any one of claims 1 to 7.
